# EUROPÄISCHE PATENTSCHRIFT

(11) **EP 3 025 040 B1**
(45) Veröffentlichungstag und Bekanntmachung des Hinweises auf die Patenterteilung: **03.05.2017**
(21) Anmeldenummer: 14737235.3
(22) Anmeldetag: 08.07.2014
(51) Int. Cl.: F02B 37/16, F16K 1/48

(54) **VENTIL**
VALVE
SOUPAPE

(30) Priorität: 25.07.2013 DE 102013214594
(43) Veröffentlichungstag der Anmeldung: 01.06.2016
(73) Patentinhaber: Continental Automotive GmbH, 30165 Hannover (DE)
(72) Erfinder: BONANNO, Rosario, 65812 Bad Soden (DE)
(86) Internationale Anmeldenummer: PCT/EP2014/064578
(87) Internationale Veröffentlichungsnummer: WO 2015/010890

(56) Entgegenhaltungen:
- WO-A1-2007/048828
- WO-A1-2014/095396
- WO-A1-2014/095402
- WO-A1-2014/095403
- CN-A- 101 354 092
- CN-U- 202 469 033
- DE-A1-102011 056 096

## Beschreibung

Gegenstand der Erfindung ist ein Ventil mit einem Gehäuse, einem in dem Gehäuse angeordneten Solenoid, einem von dem Solenoid bewegbaren Stift und einem mit dem Stift verbundenen Kolben.

Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern aber auch ein schnelles Anfahren zu gewährleisten, ist ein schnelles Öffnen und Schließen des Ventils eine wesentliche Voraussetzung. Insbesondere beim Schließen kommt es auf das sofortige Verschließen durch das Anlegen des Kolbens an einen Ventilsitz an. Der Ventilsitz wird vom Gehäuse des Turboladers gebildet, an dem das Ventil angeflanscht wird. Das hat zur Folge, dass der Ventilsitz nicht vollkommen parallel zum Kolben steht, was für ein schnelles und vor allem dichtes Schließen erforderlich wäre. Um trotzdem ein sicheres Schließen zu gewährleisten, muss sich der Kolben an den Ventilsitz anpassen. Hierzu ist es bekannt, den Kolben als ringförmigen Grundkörper mit schräg nach radial innen abstehenden Fingern auszubilden, die in eine radial umlaufende Nut des Stifts eingreifen, siehe z.B. die nicht vorveröffentlichte WO 2014/095402 A1. Aufgrund ihrer Elastizität erlauben die Finger eine Bewegung des Kolbens relativ zum Stift. Es hat sich gezeigt, dass aufgrund von Fertigungs- und Montagetoleranzen Kolben und Stift nicht spielfrei miteinander verbunden sind, was Nachteile beim Schließen des Ventils mit sich bringt.Ein Schubumluftventil nach dem vorveröffentlichten Stand der Technik ist aus der WO 2007/048828 A1 bekannt geworden.

Der Erfindung liegt daher die Aufgabe zugrunde, ein Ventil zu schaffen, dass einen einfachen Aufbau besitzt und ein schnelles und sicheres Schließen ermöglicht.

Gelöst wird die Aufgabe dadurch, dass der Kolben einen ringförmigen Grundkörper mit einer Dichtkante besitzt, dass der ringförmige Grundkörper einen als Membran ausgebildeten Boden aufweist, dass die Membran in ihrem Zentrum eine Buchse besitzt und dass die Buchse mit dem Stift verbunden ist.

Durch Anordnung der Membran wird eine Relativbewegung, insbesondere eine Schwenkbewegung, zwischen Kolben und Stift ermöglicht. Gleichzeitig ist sichergestellt, dass nur ein geringes Verschwenken des Kolbens gegenüber dem Stift möglich ist. Je nach Anwendungsfall lassen sich Schwenkwinkel von einigen Grad bis zu einigen Zehntelgrad realisieren. Dieses geringe Verschwenken ist ausreichend, um die Lageabweichungen zwischen Kolben und Ventilsitz auszugleichen. Gleichzeitig wird ein schnelles Schließen des Ventils garantiert, da sich der Schwenkwinkel begrenzen lässt. Durch die Gestaltung der Membran lässt sich der maximal mögliche Schwenkwinkel gezielt einstellen, so dass das Ventil an verschiedene Anwendungsgebiete anpassbar ist. Der Hauptvorteil besteht jedoch darin, dass auf diese Weise eine spielfreie Verbindung zwischen Stift und Kolben erreicht wird, was insbesondere im Arbeitsbereich des Ventils eine entscheidende Rolle spielt. Die zentral an der Membran angeordnete Buchse hat darüber hinaus den Vorteil, dass eine zuverlässige Verbindung mit dem Stift erreicht wird.

In vorteilhaften Ausgestaltungen besteht die Membran aus Metall oder Kunststoff, wobei sich eine Membran aus Metall besonders dünn ausbilden lässt.

In einer anderen Ausgestaltung ist die Membran rechtwinklig zur Symmetrieachse des Grundkörpers angeordnet ist.

Die Membran kann verschiedene Formen besitzen. Die Membran lässt sich kostengünstig herstellen, wenn sie scheibenförmig ist.

Eine Verstärkung der Membran bei gleichbleibender Dicke lässt sich in einer anderen Ausgestaltung dadurch erreichen, wenn die Membran konzentrische Absätze, oder Sicken aufweist.

Eine einfache und zuverlässige Verbindung des Grundkörpers mit der Membran wird erreicht, wenn der Grundkörper aus Kunststoff besteht und die Membran als Einlegeteil in den Grundkörper eingespritzt ist. Auf diese Weise lassen sich sichere Verbindungen erzeugen, insbesondere wenn Grundkörper und Membran aus unterschiedlichen Werkstoffen bestehen.

Bei einer Kunststoffmembran ist es aber auch möglich, diese zusammen mit dem Grundkörper mittels Spritzgießen zu erzeugen, so dass die Membran integral mit dem Grundkörper verbunden ist und beide ein einziges Bauteil bilden.

Die einfache Verbindung von Buchse und Membran kann durch Pressen erfolgen. Insbesondere bei dünnen Membranen wird eine sichere Verbindung jedoch dadurch erreicht, dass die Buchse mit der Membran verschweißt ist.

Bei der Verwendung einer Kunststoffmembran kann die Buchse mittels Spritzgießens integraler Bestandteil der Membran sein.

Die Membran kann aus Vollmaterial bestehen. Es hat sich jedoch als vorteilhaft herausgestellt, die Membran mit mindestens zwei, vorzugsweise vier bis sechs, Öffnungen auszubilden. Das die Öffnungen voneinander trennende Material wirkt in diesen Fällen als elastische Bereiche, so dass sich durch die Gestaltung der Öffnungen die Elastizität der Membran gezielt einstellen lässt. Insbesondere erlaubt diese Gestaltung die Verwendung einer Grundform von Membran, während die Anpassung an die verschiedenen Einsatzgebiete über die Art und Anzahl der Öffnungen erfolgt. Ein weiterer Vorteil besteht darin, dass die Membran eine größere Dicke aufweisen kann, wodurch sie insgesamt formstabiler ist, da die Elastizität über die zwischen den Öffnungen verbleibenden Bereiche eingestellt wird.

Die Verbindung des Stifts mit der Buchse kann durch Verschrauben oder Schweißen erfolgen. Eine deutlich kostengünstigere Verbindung lässt sich durch Verpressen erreichen. Dabei kann der Stift in die Buchse oder die Buchse in den Stift eingepresst werden.

Das einzupressende Bauteil lässt sich besonders leicht montieren, wenn an Stift oder Buchse ein Bund zur Begrenzung der Bewegung des einzupressenden Bauteils vorgesehen ist.

Um die Druckbelastung des Ventils, insbesondere des Gehäuses zu reduzieren, besitzt der Stift eine den Stift durchdringende Längsbohrung, über die ein Druckausgleich erfolgen kann.

Für einen noch schnelleren Druckausgleich und um gegebenenfalls Geräusche infolge des Druckausgleichs zu minimieren, besitzt der Stift zusätzlich eine rechtwinklig zur Längsachse verlaufende Querbohrung, die ebenfalls den Stift durchdringt und mit der Längsbohrung verbunden ist.

An einem Ausführungsbeispiel wird die Erfindung näher beschrieben. Es zeigt in:
- Fig. 1: eine schematische Darstellung der Anordnung des Ventils,
- Fig. 2: eine Draufsicht des Ventils,
- Fig. 3: einen Schnitt durch das Ventil nach Fig. 2,
- Fig. 4: einen Schnitt durch den Kolben und
- Fig. 5: eine perspektivische Darstellung des Kolbens.

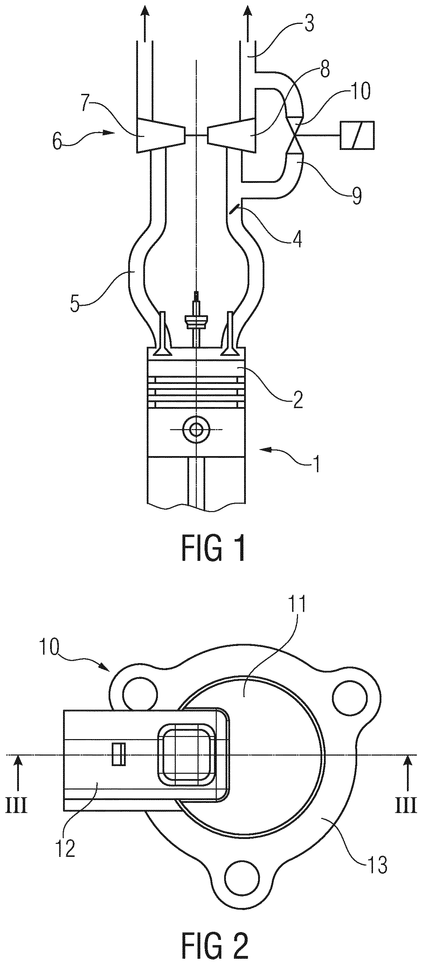

Figur 1 zeigt einen Teil des Antriebsstrangs eines Kraftfahrzeugs mit einem Zylinder 1, einem darin bewegbaren Zylinderkolben 2 und in den Zylinder 1 mündende Frischluftleitung 3 mit einer darin angeordneten Drosselklappe 4 und einer aus dem Zylinder 1 herausführenden Abgasleitung 5. Weiter ist ein Turbolader 6 angeordnet, der mit beiden Leitungen 3, 5 verbunden ist. Der Turbolader 6 besteht aus einer mit der Abgasleitung 5 verbundenen Turbine 7 und einem mit der Frischluftleitung 5 verbundenen Kompressor 8. Über eine Bypassleitung 9 kann bei schließender Drosselklappe 4 vom Kompressor 8 aufgebauter Druck durch Ableiten der verdichteten Luft zurückgeführt werden. Die Bypassleitung 9 wird durch ein Schubumluftventil 10 geöffnet oder geschlossen.

Das Ventil 10 in Fig. 2 besteht aus einem Gehäuse 11 mit einteilig angeformter Buchse 12 zum elektrischen Verbinden des Ventils 10. Das Gehäuse 11 besitzt weiter einen angeformten Flansch 13 und drei Bohrungen, über die das Gehäuse 11 am Turbolader 6 im Bereich der Bypassleitung 9 angeflanscht ist.

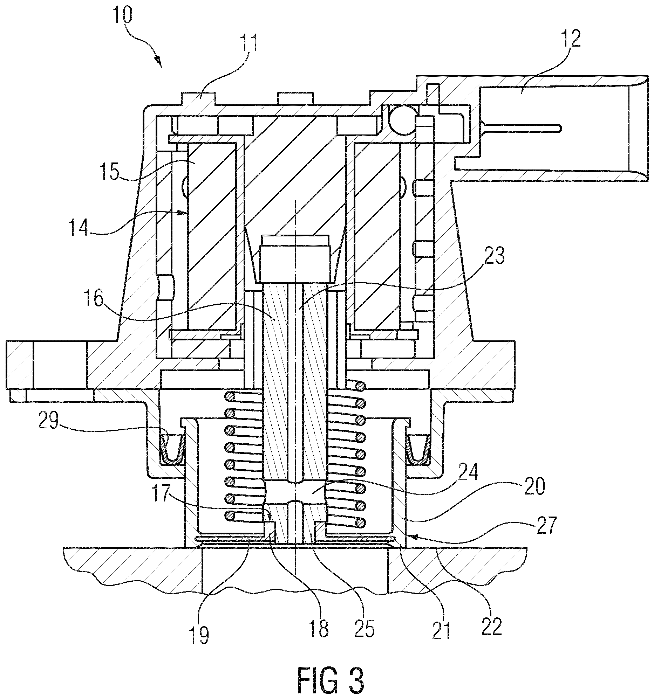

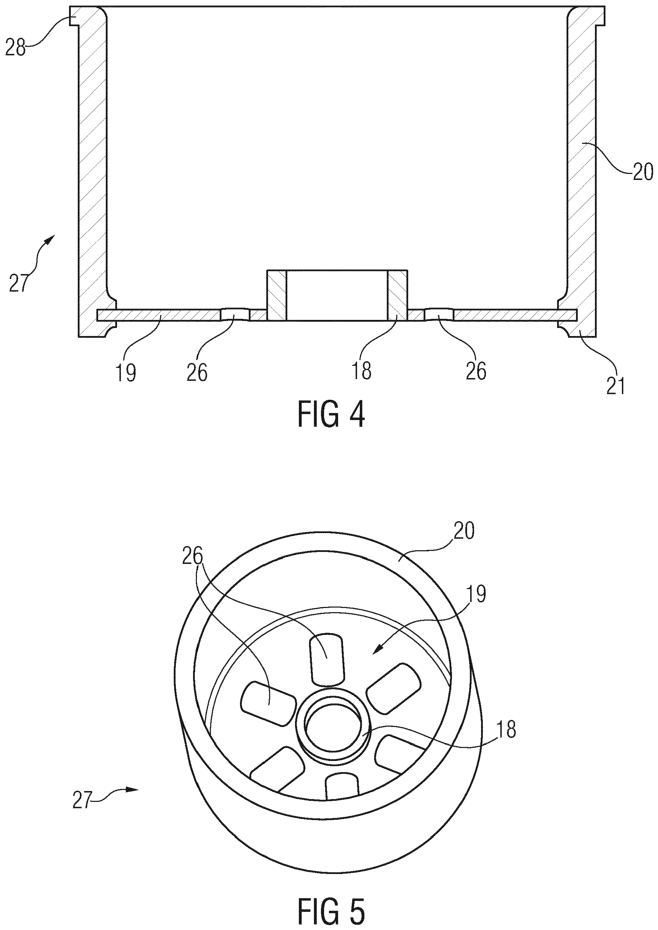

In dem Gehäuse 11 ist nach Fig. 3 ein Solenoid 14 mit einer Spule 15 und einem Metallstift 16 angeordnet. Der Metallstift 16 besitzt auf seinem dem Solenoid 14 abgewandten Ende 25 einen radial umlaufenden Bund 17. Das Ende 25 ist in eine Buchse 18 einer Membran 19 eingepresst, wobei Bund 17 und Buchse 18 aneinander anliegen. Die Membran 19 ist mit einem Grundkörper 20 aus Kunststoff verbunden. Der ringförmige Grundkörper 20 besitzt auf seiner dem Solenoid 14 abgewandten Seite eine umlaufende Dichtkante 21. In der gezeigten Schließstellung liegt die Dichtkante 21 auf dem Ventilsitz 22 an, um die Bypassleitung zu verschließen. Der weitere Aufbau des Kolbens 27 ist in den nachfolgenden Figuren 4, 5 beschrieben. Der Metallstift 16 besitzt weiter eine Längsbohrung 23 und eine rechtwinklig dazu angeordnete Querbohrung 24. Beide Bohrungen 23, 24 durchdringen den Stift 16 und dienen dem Druckausgleich im Gehäuse 11, wobei die Querbohrung 24 zum schnelleren Druckausgleich vorgesehen ist.

Der Kolben 27 in den Figuren 4, 5 besitzt eine scheibenförmige Membran 19 aus Metall, welche eine Dicke von 0,5mm aufweist. Im Zentrum der Membran 19 ist die Buchse 18 angeschweißt. Die Membran 19 besitzt Öffnungen 26, über die ein Druckausgleich stattfindet. Die Membran 19 ist mit ihrem Umfang fest mit dem Grundkörper 20 verbunden, indem sie als Einlegeteil in einer Spritzgießform eingebracht und mit Kunststoff umspritzt wurde. Die Membran 19 bildet mit dem zylinderförmigen Grundkörper 20 einen topfförmigen Kolben 27. An seinem offenen Ende ist an dem Grundkörper 20 ein Wulst 28 ausgebildet, der eine Begrenzung der Kolbenbewegung durch Anlage der Dichtung 29 in Figur 3 bildet.

## Patentansprüche

1. Ventil (10) mit einem Gehäuse (11), einem in dem Gehäuse angeordneten Solenoid (14), einem von dem Solenoid bewegbaren Stift (16), einem mit dem Stift verbundenen Kolben (27) und einer Dichtung (29), **dadurch gekennzeichnet, dass** der Kolben (27) einen ringförmigen Grundkörper (20) mit einer Dichtkante (21) besitzt, dass der ringförmige Grundkörper (20) einen als Membran (19)ausgebildeten Boden aufweist, dass die Membran (19) in ihrem Zentrum eine Buchse (18) besitzt und dass die Buchse (18) mit dem Stift (16) verbunden ist.

2. Ventil nach Anspruch 1, **dadurch gekennzeichnet, dass** die Membran (19) aus Metall oder Kunststoff ist.

3. Ventil nach Anspruch 2, **dadurch gekennzeichnet, dass** die Membran (19) rechtwinklig zur Symmetrieachse des Grundkörpers (20) angeordnet ist.

4. Ventil nach zumindest einem der vorhergehenden Ansprüche, **dadurch gekennzeichnet, dass** der Grundkörper (20) aus Kunststoff besteht und die Membran (19) als Einlegeteil in den Grundkörper (20) eingespritzt ist.

5. Ventil nach zumindest einem der vorhergehenden Ansprüche, **dadurch gekennzeichnet, dass** die Buchse (18) mit der Membran (19) verschweißt ist.

6. Ventil nach zumindest einem der vorhergehenden Ansprüche, **dadurch gekennzeichnet, dass** die Membran (19) mindestens zwei, vorzugsweise vier bis sechs, Öffnungen (26) aufweist.

7. Ventil nach zumindest einem der vorhergehenden Ansprüche, **dadurch gekennzeichnet, dass** der Stift (16) mit der Buchse (18) verpresst ist.

8. Ventil nach zumindest einem der vorhergehenden Ansprüche, **dadurch gekennzeichnet, dass** an dem Stift (16) oder der Buchse (18) ein Bund (17) zur Begrenzung der Bewegung des einzupressenden Bauteils (16, 18) vorgesehen ist.

9. Ventil nach zumindest einem der vorhergehenden Ansprüche, **dadurch gekennzeichnet, dass** der Stift (16) eine den Stift (16) durchdringende Längsbohrung (23) besitzt.

10. Ventil nach Anspruch 5, **dadurch gekennzeichnet, dass** der Stift (16) eine rechtwinklig zur Längsachse verlaufende und den Stift (16) durchdringende Querbohrung (24) besitzt, die mit der Längsbohrung (23) verbunden ist.

## Claims

1. Valve (10) having a housing (11), a solenoid (14) which is arranged in the housing, a pin (16) which can be moved by the solenoid, a piston (27) which is connected to the pin and a seal (29), **characterized in that** the piston (27) has an annular base member (20) having a sealing edge (21), **in that** the annular base member (20) has a base which is constructed as a membrane (19), **in that** the membrane (19) has a bushing (18) at the center thereof and **in that** the bushing (18) is connected to the pin (16).

2. Valve according to Claim 1, **characterized in that** the membrane (19) is of metal or plastics material.

3. Valve according to Claim 2, **characterized in that** the membrane (19) is arranged at right angles with respect to the axis of symmetry of the base member (20).

4. Valve according to at least one of the preceding claims, **characterized in that** the base member (20) comprises plastics material and the membrane (19) is injection-molded as an insertion component in the base member (20).

5. Valve according to at least one of the preceding claims, **characterized in that** the bushing (18) is welded to the membrane (19).

6. Valve according to at least one of the preceding claims, **characterized in that** the membrane (19) has at least two, preferably four to six openings (26).

7. Valve according to at least one of the preceding claims, **characterized in that** the pin (16) is pressed with the bushing (18).

8. Valve according to at least one of the preceding claims, **characterized in that** a collar (17) for limiting the movement of the component (16, 18) which is intended to be pressed in is provided on the pin (16) or the bushing (18).

9. Valve according to at least one of the preceding claims, **characterized in that** the pin (16) has a longitudinal hole (23) which extends through the pin (16).

10. Valve according to Claim 5, **characterized in that** the pin (16) has a transverse hole (24) which extends at right angles relative to the longitudinal axis and which extends through the pin (16) and which is connected to the longitudinal hole (23).

## Revendications

1. Soupape (10) comprenant un boîtier (11), un solénoïde (14) disposé dans le boîtier, une goupille (16) pouvant être déplacée par le solénoïde, un piston (27) connecté à la goupille et un joint d'étanchéité (29), **caractérisée en ce que** le piston (27) possède un corps de base de forme annulaire (20) avec une arête d'étanchéité (21), **en ce que** le corps de base de forme annulaire (20) présente un fond réalisé sous forme de membrane (19), **en ce que** la membrane (19) possède en son centre une douille (18) et **en ce que** la douille (18) est connectée à la goupille (16).

2. Soupape selon la revendication 1, **caractérisée en ce que** la membrane (19) est en métal ou en plastique.

3. Soupape selon la revendication 2, **caractérisée en ce que** la membrane (19) est disposée à angle droit par rapport à l'axe de symétrie du corps de base (20).

4. Soupape selon au moins l'une quelconque des revendications précédentes, **caractérisée en ce que** le corps de base (20) se compose de plastique et la membrane (19) est moulée par injection sous forme de pièce d'insertion dans le corps de base (20).

5. Soupape selon au moins l'une quelconque des revendications précédentes, **caractérisée en ce que** la douille (18) est soudée à la membrane (19).

6. Soupape selon au moins l'une quelconque des revendications précédentes, **caractérisée en ce que** la membrane (19) présente au moins deux, de préférence quatre à six ouvertures (26).

7. Soupape selon au moins l'une quelconque des revendications précédentes, **caractérisée en ce que** la goupille (16) est pressée avec la douille (18).

8. Soupape selon au moins l'une quelconque des revendications précédentes, **caractérisée en ce qu'**un épaulement (17) pour limiter le mouvement du composant à presser (16, 18) est prévu au niveau de la goupille (16) ou de la douille (18).

9. Soupape selon au moins l'une quelconque des revendications précédentes, **caractérisée en ce que** la goupille (16) possède un alésage longitudinal (23) traversant la goupille (16).

10. Soupape selon la revendication 5, **caractérisée en ce que** la goupille (16) possède un alésage transversal (24) s'étendant à angle droit par rapport à l'axe longitudinal et traversant la goupille (16), lequel est connecté à l'alésage longitudinal (23).
